# FASCICULE DE BREVET EUROPEEN

(11) **EP 0 718 638 B1**
(45) Date de publication et mention de la délivrance du brevet: **08.03.2000**
(21) Numéro de dépôt: 95402576.3
(22) Date de dépôt: 17.11.1995
(51) Int. Cl.: G01S 15/89, G01S 15/87, G01S 7/52, F41H 11/12

(54) **Procédé de détection d'objets répartis dans une zone de terrain ou de détermination des caractéristiques de propagation d'une onde acoustique dans le sol et dispositif mettant en oeuvre de tels procédés**
Verfahren zum Entdecken von Gegenständen in der Bodenfläche oder zum Bestimmen der Ausbreitungsmerkmale einer akustischen Welle im Boden und Vorrichtung dafür
Method of detection of objects located in a ground area or of determination of the propagation characteristics of an acoustic wave in the ground, and system to carry out these methods

(30) Priorité: 20.12.1994 FR 9415338
(43) Date de publication de la demande: 26.06.1996
(73) Titulaire: GIAT INDUSTRIES, 78000 Versailles (FR)
(72) Inventeur: Arnaud, Philippe, F-45100 Orleans (FR); Laine, Loic, F-18230 Saint Doulchard (FR)
(74) Mandataire: Couderc, Thierry

(56) Documents cités:
- DE-A- 2 548 041
- DE-A- 4 136 587
- US-A- 5 337 289

## Description

Le domaine de la présente invention est celui des procédés et des dispositifs permettant de détecter des objets ou bien de déterminer les caractéristiques de propagation d'une onde acoustique dans le sol d'une zone de terrain.

L'invention vise plus particulièrement un procédé et un dispositif permettant de détecter des mines enterrées dans une zone de terrain.

On connaît des procédés et dispositifs de détection de mines utilisant des moyens magnétiques. Ces dispositifs mettent en oeuvre un générateur et une bobine conductrice. Lorsqu'un matériau conducteur se trouve au voisinage de la bobine, le courant circulant dans cette dernière est perturbé et un signal de détection est fourni par un circuit électronique de traitement.

De tels dispositifs de détection imposent d'amener la bobine de détection au voisinage de la mine, ce qui met en danger la personne chargée de manipuler le détecteur et rend les opérations de déminage longues et délicates.

De plus, le détecteur risque d'être activé par des objets magnétiques autres que les mines recherchées, ce qui provoque de fausses alarmes qui ralentissent encore les opérations de déminage.

Enfin de tels procédés et dispositifs sont inadaptés à la détection des mines modernes qui n'utilisent pratiquement pas de matériaux magnétiques.

On connait aussi le procédé qui permet d'assurer une détection par voie acoustique d'objets (en particulier de mines) répartis dans une zone de terrain. Il n'est donc pas tributaire de la nature des matériaux, magnétiques ou non, constituant les objets. Un tel procédé est connu des documents DE 4 136 587 ou DE 2 548 041.

On connaît par ailleurs, notamment par le brevet FR2696573, un procédé et dispositif d'examen utilisant le principe du retournement temporel d'une onde acoustique.

Ce procédé met en oeuvre un certain nombre de transducteurs (émetteurs/récepteurs) acoustiques et il permet de focaliser d'une façon pratiquement automatique un faisceau acoustique sur un objet dont la position est inconnue.

L'analyse des signaux recueillis après un certain nombre d'itérations permet de déterminer un front d'onde dont le sommet ou le foyer donnera la position de l'objet.

Un tel procédé est particulièrement bien adapté à l'imagerie médicale et permet de détecter la position de calculs ou de tumeurs dans le corps humain.

En effet, dans ce cas les transducteurs sont placés à des distances réduites (inférieures à 200 mm) des objets à détecter et la vitesse de propagation des ondes sonores reste sensiblement la même dans toutes les directions du domaine à explorer.

Ce procédé est par contre inadapté à la détection d'objets dans le sol notamment dans des terrains de dimensions importantes (de l'ordre de 5 à 10.000 m²).

En effet, les nombreuses hétérogénéités présentes dans une telle surface de terrain vont faire varier les vitesses de propagations des ondes sonores dans de grandes proportions, conduisant à une impossibilité de déterminer un front d'onde ayant un sommet dont la position soit suffisamment bien définie.

C'est le but de la présente invention que de proposer un procédé de détection ne présentant pas de tels inconvénients.

Le procédé selon l'invention peut être mis en oeuvre à distance des objets à détecter ce qui permet d'accroître la sécurité de l'opération lorsque les objets sont des mines.

Le procédé selon l'invention permet de détecter les objets dans une zone de terrain de dimensions importantes sans pour autant imposer un passage sur le terrain avec les moyens de détection, ce qui accroit encore la sécurité.

Lorsqu'il est employé à la détection de mines, le procédé selon l'invention autorise également, une activation ou une destruction à distance de ces dernières.

L'invention a également pour objet un dispositif permettant la mise en ouvre de ce procédé.

Ce dispositif permet d'assurer une détection fiable et à distance pour des zones de terrain de dimensions importantes.

Il est donc particulièrement bien adapté aux opérations de dépollution de territoires après un conflit.

C'est aussi un but de la présente invention que de proposer un procédé permettant de déterminer les caractéristiques de propagation d'une onde acoustique dans le sol d'une zone de terrain.

Les procédés connus envisagent l'emploi d'émetteurs et de récepteurs acoustiques disposés en des points espacés. Ils présentent comme inconvénient d'être de mise en oeuvre complexe, en raison de l'éloignement entre émetteurs et récepteurs et des problèmes de synchronisation qui en découlent.

Ils sont également relativement imprécis en raison des réflexions multiples qui peuvent intervenir notamment sur des obstacles enterrés dans le sol.

L'invention propose une approche globale à la fois des problèmes de détermination des caractéristiques du sol et des problèmes de détection d'objets enterrés.

Le concept inventif global proposé met en oeuvre le principe du retournement temporel des ondes acoustiques qui permet, d'une part d'assurer la réalisation d'une cartographie rapide et précise des caractéristiques acoustiques du sol et d'autre part de détecter de façon sûre des objets enterrés même dans des terrains de dimensions importantes.

Ainsi l'invention a pour objet un procédé de détection d'objets, et en particulier de mines, répartis dans une zone de terrain, procédé caractérisé en ce qu'on met en oeuvre une pluralité de transducteurs acoustiques et qu'on réalise les étapes suivantes:
- on dispose n transducteurs le long d'une première frontière de la zone, m cibles étalons (m étant supérieur à 2) étant réparties le long d'une deuxième frontière de la zone,
- on détermine une fréquence optimale d'emploi des transducteurs qui est fonction de la nature du sol, fréquence qui donne une amplitude de signal reçu maximale sur une majorité de transducteurs lorsqu'elle est émise par l'un d'eux,
- on réalise une cartographie des caractéristiques de propagation dans le sol de la zone de terrain en déterminant une matrice des vitesses de propagation moyennes Vij le long des différentes directions qui relient chaque transducteur Ti (i variant de 1 à n) à chacune des cibles étalons Cj (j variant de 1 à m),
- on envoie dans le sol du terrain par au moins un transducteur une impulsion initiale à la fréquence optimale,
- on sélectionne au moyen d'au moins une fenêtre temporelle, les signaux d'écho provenant d'un premier objet situé dans la zone,
- on effectue k retournements temporels successifs des signaux reçus par les transducteurs afin de focaliser la détection sur le premier objet et on mémorise les signaux réflechis à l'issue du dernier retournement temporel,
- on recherche au moins deux transducteurs Tx, Ty pour lesquels les temps de propagation du signal tx, ty sont les plus faibles,
- on détermine pour chacun des transducteurs retenus les points ou zones de localisation potentiels pour l'objet le long de plusieurs directions Dxj,Dyj joignant le transducteur Tx,Ty considéré à une cible étalon Cj, cette détermination se faisant par le calcul des différentes distances dxj, dyj (j variant de 1 à m) le long des directions Dxj,Dyj, distance égale au produit du temps de propagation considéré tx,ty par le coefficient approprié Vxj, Vyj de la matrice des vitesses de propagation,
- on détermine la localisation effective de l'objet comme une zone d'intersection des différentes courbes joignant les points de localisation potentielle associés à chaque transducteur.

Selon un premier mode de réalisation de l'invention, pour déterminer la matrice des vitesses de propagation moyennes Vij le long des différentes directions qui relient chaque transducteur Ti à chacune des cibles étalons Cj on procède de la façon suivante:
- on envoie dans le sol du terrain par au moins un transducteur une impulsion initiale brève et non focalisée à la fréquence optimale,
- on enregistre les signaux d'écho renvoyés par le terrain et reçus par tous les transducteurs, chaque signal de retour étant mémorisé en fonction du temps, avec comme origine des temps l'instant d'envoi de l'impulsion initiale,
- on sélectionne successivement au moyen de fenêtres temporelles appropriées, les signaux d'écho provenant de chaque cible étalon et on effectue pour chaque cible étalon plusieurs retournements temporels des signaux reçus par les transducteurs,
- on calcule les vitesses de propagation moyennes Vij comme le rapport pour chaque transducteur Ti, de sa distance Dij à la cible étalon Cj sur laquelle les transducteurs sont focalisés, au temps de propagation tij du signal entre ce transducteur et cette cible tel qu'il est mesuré (soit: Vij= Dij/tij).

Selon un deuxième mode de réalisation de l'invention, pour déterminer la matrice des vitesses de propagation moyennes Vij le long des différentes directions qui relient chaque transducteur Ti à chacune des cibles étalons Cj on dote chaque cible étalon d'un emetteur et/ou d'un recepteur de signaux acoustiques puis on procède de la façon suivante:
(a)-on envoie à partir d'une source, qui sera soit une cible étalon soit un transducteur, un signal bref et non focalisé à la fréquence optimale,
(b)-on enregistre le temps de propagation de ce signal entre la source du signal, c'est à dire la cible étalon ou le transducteur, et les différents récepteurs soit respectivement tous les autres transducteurs ou toutes les autres cibles étalons,
(c)-on calcule les vitesses de propagation moyennes Vij entre la source du signal et les différents récepteurs comme le rapport pour un transducteur Ti, de sa distance Dij à une cible étalon Cj au temps de propagation tij du signal entre ce transducteur et cette cible tel qu'il est mesuré (soit: Vij= Dij/tij),
(d)-on répète les étapes (a) à (c) pour toutes les autres sources.

Selon une variante, après reception des premiers signaux écho on choisit le premier objet à traiter par retournement temporel par une analyse des ondes de forme suivant les différents echos de retour reçus par chaque transducteur, suivie d'une comparaison de ces ondes de forme à une bibliothèque de signatures caractéristiques des principaux objets recherchés.

Selon une autre variante, on identifie le premier objet après exécution des k retournements temporels par une analyse des ondes de forme suivant les différents signaux echos reçus par chaque transducteur et comparaison de ces ondes de forme à une bibliothèque de signatures caractéristiques des principaux objets recherchés.

Selon une autre variante, après localisation et choix d'un premier objet, on envoie à celui-ci au moins un autre signal acoustique ayant la forme de celui mémorisé à l'issue du dernier retournement temporel, signal amplifié et dont l'intensité est suffisante pour faire bouger ou vibrer l'objet.

L'invention a également pour objet un procédé de détermination des caractéristiques de propagation d'une onde acoustique dans le sol d'une zone de terrain, procédé caractérisé en ce qu'on met en oeuvre une pluralité de transducteurs acoustiques et qu'on réalise les étapes suivantes:
- on dispose n transducteurs le long d'une première frontière de la zone et on répartit m cibles étalons (m étant supérieur à 2) le long d'une deuxième frontière de la zone,
- on détermine une fréquence optimale d'emploi des transducteurs qui est fonction de la nature du sol, fréquence qui donne une amplitude de signal reçu maximale sur une majorité de transducteurs lorsqu'elle est émise par l'un d'eux,
- on envoie dans le sol du terrain par au moins un transducteur une impulsion initiale brève et non focalisée à cette fréquence optimale,
- on enregistre les signaux d'écho renvoyés par le terrain et reçus par tous les transducteurs, chaque signal de retour étant mémorisé en fonction du temps, avec comme origine des temps l'instant d'envoi de l'impulsion initiale,
- on sélectionne successivement au moyen de fenêtres temporelles appropriées, les signaux d'écho provenant de chaque cible étalon et on effectue pour chaque cible etalon plusieurs retournements temporels des signaux reçus par les transducteurs,
- on réalise une cartographie des caractéristiques de propagation dans le sol de la zone de terrain en déterminant une matrice des vitesses de propagation moyennes Vij le long des différentes directions reliant chaque transducteur Ti (i variant de 1 à n) à chacune des cibles étalons Cj (j variant de 1 à m), chaque vitesse Vij étant calculée comme le rapport pour chaque transducteur Ti, de sa distance Dij à la cible étalon Cj sur laquelle les transducteurs sont focalisés, au temps de propagation tij du signal entre ce transducteur et cette cible tel qu'il est mesuré (soit: Vij= Dij/tij).

L'invention a également pour objet un dispositif de détermination des caractéristiques de propagation d'une onde acoustique dans le sol d'une zone de terrain ou de détection d'objets, et en particulier de mines réparties dans une zone de terrain et adapté pour mettre en oeuvre les procédés précédents, dispositif caractérisé en ce qu'il comporte au moins une rangée de transducteurs acoustiques reliés à un circuit électronique de traitement comportant une étape de retournement temporel, chaque transducteur étant porté par un support destiné à être enfoncé ou appliqué sur le sol.

Ce dispositif pourra comprendre au moins une rangée de cibles étalons qui ont la forme de piquets pouvant être enfoncés dans le sol ou encore de cibles étalons qui comportent une partie enterrée ayant sensiblement la forme d'un objet que l'on recherche dans le terrain.

Le dispositif comportera avantageusement des moyens de mesure des différentes distances entre supports de transducteurs et cibles étalons.

Ces moyens de mesure de distance pourront comporter au moins un télémètre laser porté par au moins un support de transducteur et/ou au moins une cible étalon.

Suivant un mode particulier de réalisation, les supports de transducteurs et/ou les cibles étalons sont mis en place de façon individuelle sur le terrain, des moyens de liaison radio étant prévus entre chaque support de transducteur et/ou cible étalon et au moins une partie de l'électronique de traitement de façon à permettre une synchronisation des émissions des transducteurs.

L'invention sera mieux comprise à la lecture de la description de modes particuliers de réalisation, description faite en référence aux dessins annexés et dans lesquels:
- la figure 1 schématise un terrain au voisinage duquel est disposé un dispositif selon l'invention, cette figure schématise l'étape de cartographie des caractéristiques de propagation d'une onde acoustique dans le sol du terrain,
- la figure 2 schématise le même terrain lors de la mise en oeuvre d'une étape de détection d'objets enterrés,
- la figure 3 est un schéma de principe de l'électronique de traitement associée au dispositif selon l'invention,
- la figure 4a représente un piquet portant un transducteur,
- la figure 4b représente un piquet cible étalon,
- la figure 4c représente un autre type de cible étalon,
- la figure 5 montre la mise en oeuvre du dispositif selon l'invention.

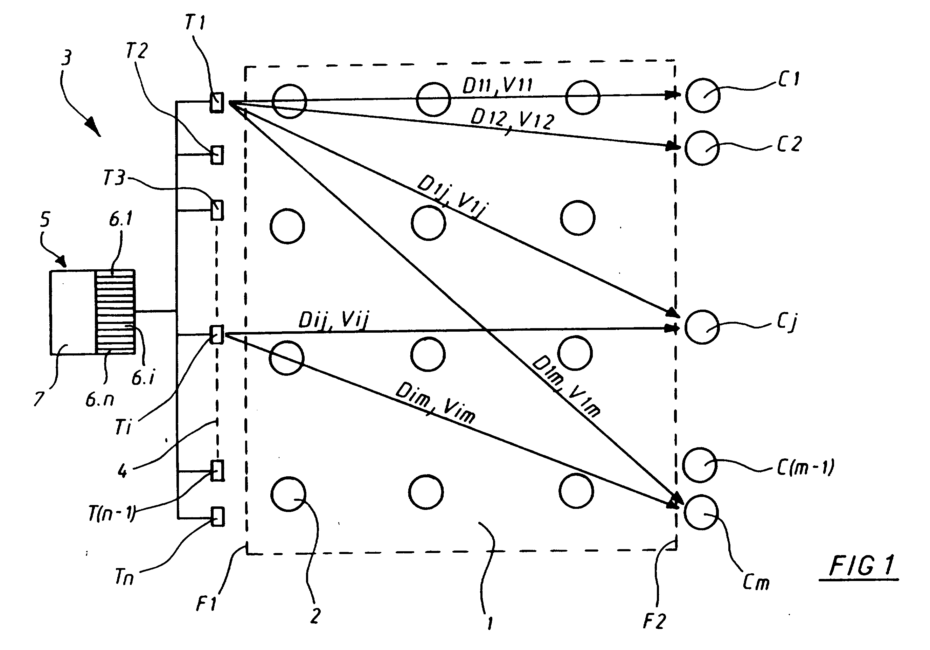

En se reportant à la figure 1, une zone de terrain 1, délimitée ici par des traits interrompus, contient un certain nombre d'objets 2, qui sont des mines enterrées.

Un dispositif 3 de détection (ou de détermination de caractéristiques de propagation d'onde acoustique dans le sol) selon l'invention comprend un certain nombre (n) de transducteurs acoustiques répartis suivant une ligne 4 (les différents transducteurs sont numérotés T1, T2, ... Ti,... Tn). Les transducteurs sont placés le long d'une première frontière F1 de la zone 1.

Les transducteurs sont constitués d'une façon classique par des plaquettes de céramique piézoélectrique ou par des transducteurs électromagnétiques.

Les transducteurs sont séparés par un pas par exemple de l'ordre de 500mm. On pourra choisir un pas dont la valeur est du même ordre de grandeur que la plus grande dimension des mines ou objets à détecter.

Mais on adoptera de préférence un pas relativement important (de l'ordre de 10m), cela afin d'effectuer une recherche rapide de mines (ou une cartographie de propagation d'onde acoustique) dans une zone de terrain de grandes dimensions (jusqu'à 200 m x 200 m).

Les transducteurs sont disposés de façon à pouvoir émettre et recevoir des ondes acoustiques dans le sol. Ils sont portés par exemple par des supports en forme de piquets qui permettent leur mise en place à une profondeur optimale (par exemple la profondeur habituelle de mise en place des mines, soit de 200 à 300mm), ou encore la profondeur à laquelle on cherche à étudier les caractéristiques de propagation acoustique.

Les transducteurs pourraient également être portés par des supports simplement posés sur le sol. Dans ce cas, le support assure le maintien du transducteur plaqué contre le sol. Les ondes acoustiques sont alors émises en surface mais elles se propagent cependant dans une couche de terrain dont l'épaisseur est de l'ordre de 200 à 300mm, ce qui autorise la détection de mines qui sont habituellement enterrées à de telles profondeurs.

Les transducteurs T1 à Tn sont reliés à un boîtier électronique de traitement 5 qui comprend un certain nombre de voies 6.1, 6.2,...6.i, ..6.n (une voie par transducteur) et un ensemble de commande et contrôle commun 7.

Le dispositif selon l'invention comprend également m cibles étalons, numérotées sur la figure C1, C2, ...Cj, ...Cm et réparties suivant une ligne et le long d'une deuxième frontière F2 de la zone. Les cibles étalons ont par exemple la forme de piquets enfoncés dans le sol jusqu'à une profondeur appropriée. On pourra ainsi choisir une profondeur sensiblement égale à celle d'enfoncement des piquets portant les transducteurs, ou encore égale à celle à laquelle des objets doivent être recherchés ou à laquelle les caractéristiques du sol doivent être mesurées.

Suivant le procédé proposé par l'invention on va tout d'abord déterminer une fréquence optimale d'emploi des transducteurs.

Cette fréquence est fonction de la nature du sol dans lequel sont placés ces derniers.

Pour déterminer cette fréquence on va appliquer à un seul transducteur, de préférence celui disposé au milieu de la ligne 4, une fréquence non focalisée variable (par exemple au moyen d'un générateur de fréquence vobulée), et on va analyser les signaux reçus par les autres transducteurs en fonction de la fréquence émise.

On retiendra la fréquence de travail pour laquelle l'amplitude des signaux reçus par les transducteurs est maximale sur une majorité des transducteurs (au moins 50% des transducteurs).

Concrètement les fréquences d'emploi varient le plus souvent entre 10 Hz et 100 kHz suivant la nature du sol.

On va ensuite réaliser une cartographie des caractéristiques de propagation des ondes acoustiques dans le sol de la zone de terrain.

Pour cela il est nécessaire de déterminer une matrice des vitesses de propagation moyennes Vij le long des différentes directions qui relient chaque transducteur Ti (i variant de 1 à n) à chacune des cibles étalons Cj (j variant de 1 à m).

Selon le procédé avantageux proposé par l'invention cette cartographie est réalisée en mettant en oeuvre la méthode de focalisation des ondes sonores par retournement temporel des signaux.

Cette méthode est connue de l'homme du métier dans le domaine de l'imagerie médicale et elle est décrite notamment dans les brevets FR2642640 et FR2696573, elle ne sera donc pas décrite ici en détails.

La méthode consiste à :
- envoyer dans le sol du terrain par au moins un transducteur une impulsion acoustique initiale brève et non focalisée à la fréquence optimale,
- enregistrer les signaux d'écho renvoyés par le terrain et reçus par tous les transducteurs, chaque signal de retour étant mémorisé en fonction du temps, avec comme origine des temps l'instant d'envoi de l'impulsion initiale,
- sélectionner successivement au moyen de fenêtres temporelles appropriées, les signaux d'écho provenant des différentes cibles étalons et effectuer pour chaque cible étalon plusieurs retournements temporels des signaux reçus par les transducteurs afin de focaliser la détection sur cette cible.

On calculera alors chaque vitesse de propagation moyenne Vij comme le rapport pour un transducteur Ti, de sa distance Dij à la cible étalon Cj sur laquelle les transducteurs sont focalisés, au temps de propagation tij du signal entre ce transducteur et cette cible tel qu'il est mesuré à l'issue du dernier retournement temporel pour la cible considérée (soit: Vij= Dij/tij).

Concrètement on réalisera au moins 5 retournements temporels pour chaque cible étalon afin d'assurer une focalisation suffisante.

Le nombre de retournements temporels (pair ou impair) dépend de la nature du sol, on pourra préférer un nombre de retournements impair afin d'avoir une symétrie du front d'onde des signaux obtenus.

On estimera que la focalisation obtenue est suffisante lorsque l'écho renvoyé par une cible est suffisamment discriminé des autres, par exemple lorsque son amplitude est au moins trois fois plus importante que celle des autres.

Les distances Dij sont mesurées avec des moyens appropriés, par exemple un télémètre laser monté sur chaque support porte transducteur et orienté successivement vers chaque cible étalon.

Chaque temps de propagation tij est mesuré comme étant égal à la moitié de la durée séparant l'émission d'un signal et le retour de l'écho correspondant à la cible.

A l'issue de l'opération de cartographie on possède donc une matrice, caractéristique de la zone de terrain 1, et dont les coefficients sont les vitesses de propagation Vij des ondes sonores à la fréquence optimale considérée entre chaque transducteur Ti et chaque cible Cj. Ces vitesses sont donc liées à des directions Dij joignant un transducteur Ti à une cible Cj. Seules quelques directions de propagation Dij sont représentées à la figure 1.

La focalisation des ondes acoustiques est réalisée sur chaque cible étalon par le choix d'une fenêtre temporelle appropriée.

Le principe du choix d'une fenêtre temporelle est connu par les documents cités précédemment. Il consiste à ne ré-émettre lors du retournement que les signaux provenant d'une certaine zone du terrain dans laquelle un objet est potentiellement présent.

Avec le procédé selon l'invention la position des cibles étalons est connue avec précision, il est donc facile de choisir les échos provenant d'une cible donnée, et de définir la fenêtre temporelle par rapport à ces échos.

On pourra avantageusement choisir pour réaliser la cible un piquet ayant des dimensions caractéristiques ou bien réalisé en un matériau particulier de telle sorte que l'écho provenant de la cible étalon puisse être reconnu facilement.

On pourra par exemple choisir pour la cible étalon des dimensions et des matériaux proches de ceux des objets recherchés.

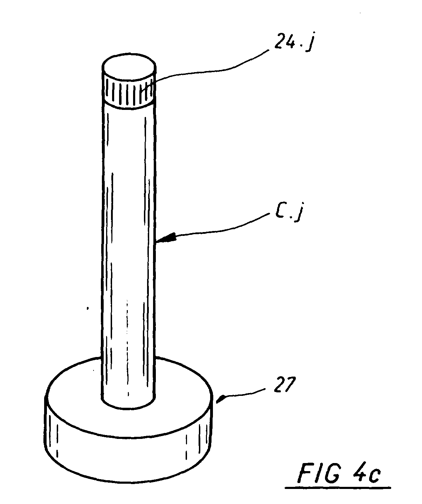

On adoptera par exemple, pour la détection des mines, des cibles comportant un cylindre d'environ 200mm de diamètre et 100mm de haut (dimensions habituelles des mines anti char), cylindre qui sera enterré à la profondeur habituelle pour les mines. Voir notamment la figure 4c décrite ci après.

Le procédé itératif de retournement temporel des signaux permet d'assurer une focalisation du signal sur un objet particulier. On élimine ainsi les signaux parasites et on accroit la précision de la localisation par les transducteurs. On est donc assuré que les signaux reçus proviennent effectivement de la cible étalon considérée, ce qui garantit la précision du calcul de la vitesse Vij le long de la direction Dij.

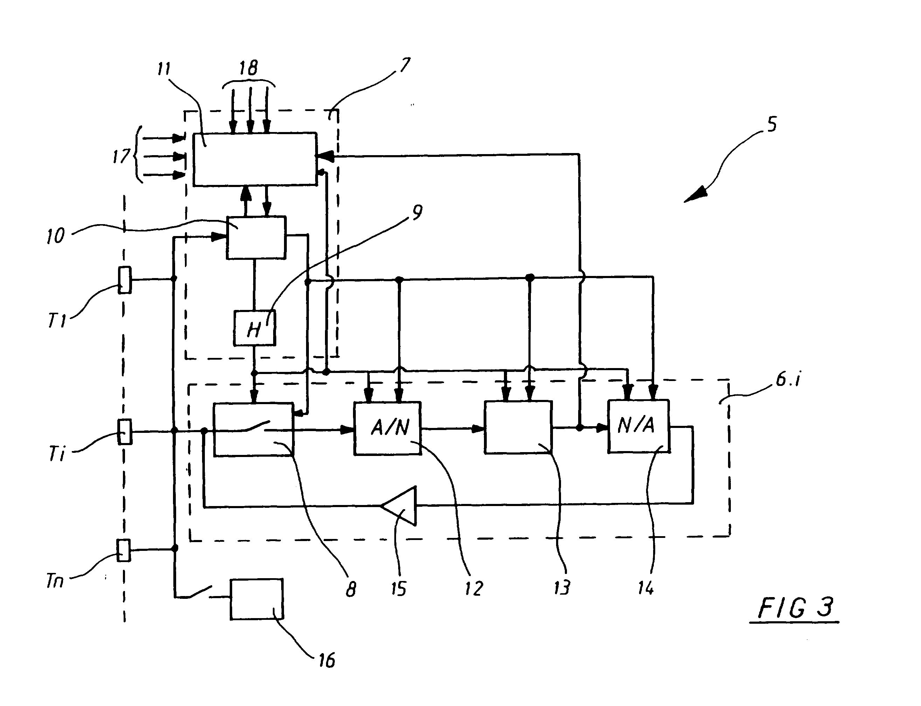

La figure 3 représente un mode de réalisation d'un boîtier électronique de traitement 5 permettant de mettre en oeuvre le procédé précédent. Cette électronique de traitement comprend des voies de traitement 6.1,..,6.i,..6.n et un ensemble de commande 7 commun.

Chaque transducteur Ti est associé à une voie de traitement 6.i (une seule voie est représentée ici).

Chaque voie 6.i comprend un échantillonneur 8 qui est destiné à fournir des échantillons analogiques du signal reçu par le transducteur Ti à la fréquence d'une horloge 9 de l'ensemble de commande 7. La fréquence d'échantillonnage donnée par l'horloge sera fonction de la fréquence optimale de travail. Elle sera de préférence supérieure à R/LxVij, expression dans laquelle R est la résolution ou le nombre de points du signal (100 par exemple), L est la principale dimension du plus petit objet cherché et Vij la vitesse de propagation moyenne des ondes dans le sol.

Les intervalles de temps pendant lesquels l'échantillonneur travaille sont déterminés par un cadenceur 10 (lui aussi solidaire de l'ensemble de commande 7). Le cadenceur permet de définir la fenêtre temporelle dans laquelle les signaux échos seront considérés par les différents échantillonneurs. La durée de la fenêtre temporelle sera choisie suffisante pour que chaque transducteur puisse recevoir un écho retour correspondant à la cible étalon choisie.

D'une façon connue cette fenêtre temporelle a été déterminée après réception des premiers signaux d'échos, de façon à encadrer tous les maximas souhaités correspondant à la cible étalon.

Dans le cas où la distance entre les transducteurs extrêmes (1 et n) est importante (supérieure à 100m), il sera possible de définir des fenêtres temporelles différentes pour plusieurs groupes de transducteurs afin de donner à chaque fenêtre une largeur suffisamment réduite pour éliminer les échos non souhaités et améliorer la focalisation.

La ou les fenêtres temporelles seront choisies par l'utilisateur par une action sur le cadenceur 10 au moyen d'un calculateur 11 (lui aussi solidaire de l'ensemble de commande 7) et doté d'une interface appropriée avec l'utilisateur (clavier, écran...).

Pour une voie 6.i donnée, l'échantillonneur 8 est suivi d'un convertisseur analogique/numérique 12. Il suffit en général d'une conversion sur dix bits pour représenter de façon satisfaisante les échos. Les mots représentatifs d'un échantillon sont stockés dans une mémoire 13, organisée en pile d'attente (du type dernier entré-premier sorti).

La capacité de cette mémoire sera choisie suffisante pour stocker tous les échantillons reçus pendant la durée de la fenêtre temporelle.

Le cadenceur 10 est également prévu pour provoquer l'émission d'un front d'onde retourné au bout d'un temps bref après la fin de réception de l'écho reçu (quelques millisecondes).

Chaque voie 6.i comporte pour permettre la ré-émission un convertisseur numérique/analogique 14, suivi éventuellement par un amplificateur 15 dont la sortie attaque le transducteur associé Ti.

Un circuit d'excitation 16 permet d'appliquer à un ou plusieurs des transducteurs l'impulsion initiale brève et non focalisée à la fréquence optimale.

On pourra utiliser aussi ce circuit d'excitation pour déterminer la fréquence d'emploi optimale.

Le circuit 16 est représenté relié à tous les transducteurs. En fait des moyens (non représentés) sont prévus pour le connecter à un ou plusieurs transducteurs au choix de l'utilisateur.

Un tel boîtier électronique de traitement 5 est décrit dans les brevets FR2642640 et FR2696573.

Le calculateur 11 sera relié à toutes les voies 6.i associées aux différents transducteurs. Il en est de même pour l'horloge 9 et le cadenceur 10, la synchronisation des différentes voies étant essentielle pour assurer le bon fonctionnement du dispositif de focalisation par retournement temporel des échos. On a schématisé en 17 les connexions reliant l'ensemble de commande et contrôle 7 aux différentes voies de traitement 6.i.

Le calculateur 11 reçoit également (connexions 18) les informations fournies par le ou les différents télémètres.

Il contient aussi des mémoires ou registres permettant de stocker une matrice contenant les différentes distances relatives Dij mesurées entre chaque transducteur Ti et chaque cible étalon Cj.

A l'issue de chaque phase de focalisation par retournement temporel sur une cible Cj donnée, le calculateur détermine les différents temps de propagation tij des signaux entre chaque transducteur et cette cible, puis il calcule les vitesses de propagation moyennes Vij le long des différentes directions reliant chaque transducteur à la cible étalon Cj en réalisant le rapport: Vij= Dij/tij.

Après exécution des focalisations sur les différentes cibles Cj (j variant de 1 à m), le calculateur contient donc en mémoire toutes les valeurs des vitesses de propagation moyennes Vij le long des différentes directions reliant chaque transducteur à chaque cible étalon.

Cette matrice des caractéristiques de propagations est utilisée par le procédé selon l'invention pour réaliser une détection d'objets enterrés et en particulier de mines.

Pour cela on va encore utiliser le procédé de focalisation des ondes acoustiques par retournement temporel, mais on choisira une fenêtre temporelle permettant de sélectionner les signaux d'écho provenant d'un premier objet, tel une mine 2, situé dans la zone.

La fréquence de travail employée est encore la fréquence optimale déterminée précédemment.

D'une façon classique la fenêtre temporelle est choisie à partir du premier signal d'écho reçu par le dispositif. On choisit habituellement de retourner les signaux qui entourent certains maximas repérés sur les échos, maximas qui correspondent en principe à une onde réfléchie par un objet.

Compte tenu des dimensions du terrain à explorer on s'attachera tout d'abord aux objets les plus proches des transducteurs, la fenêtre temporelle ignorera donc les échos provenant des objets les plus lointains.

On pourra avantageusement analyser les ondes de forme qui suivent les différents échos de retour reçus par chaque transducteur et comparer ces ondes de forme à une bibliothèque de signatures caractéristiques des principales mines recherchées.

Une telle bibliothèque est facile à établir en réalisant un étalonnage du dispositif sur un terrain connu dans lequel seront enterrées successivement les différentes mines connues que l'on peut être amené à rechercher.

La comparaison entre les ondes de forme et la bibliothèque de signatures sera de préférence faite au moyen de circuits neuronaux. De tels circuits sont connus de l'homme du métier et ils permettent de réaliser rapidement les calculs de reconnaissance de formes.

Après choix de la fenêtre temporelle, on effectue k retournements temporels successifs des signaux reçus par les transducteurs afin de focaliser la détection sur la première mine et on mémorise les signaux réfléchis à l'issue du dernier retournement temporel.

Après exécution de k retournements temporels, on pourra pratiquer une deuxième identification de la mine avec un niveau de précision supérieur.

Pour cela on effectuera encore une comparaison des ondes de forme qui suivent les différents signaux échos reçus par chaque transducteur avec une bibliothèque de signatures de mines.

A l'issue de la focalisation, on recherche au moins deux transducteurs Tx, Ty pour lesquels les temps de propagation mesurés tx, ty du signal sont les plus faibles.

Ces transducteurs correspondent en principe à ceux situés le plus près de la première mine.

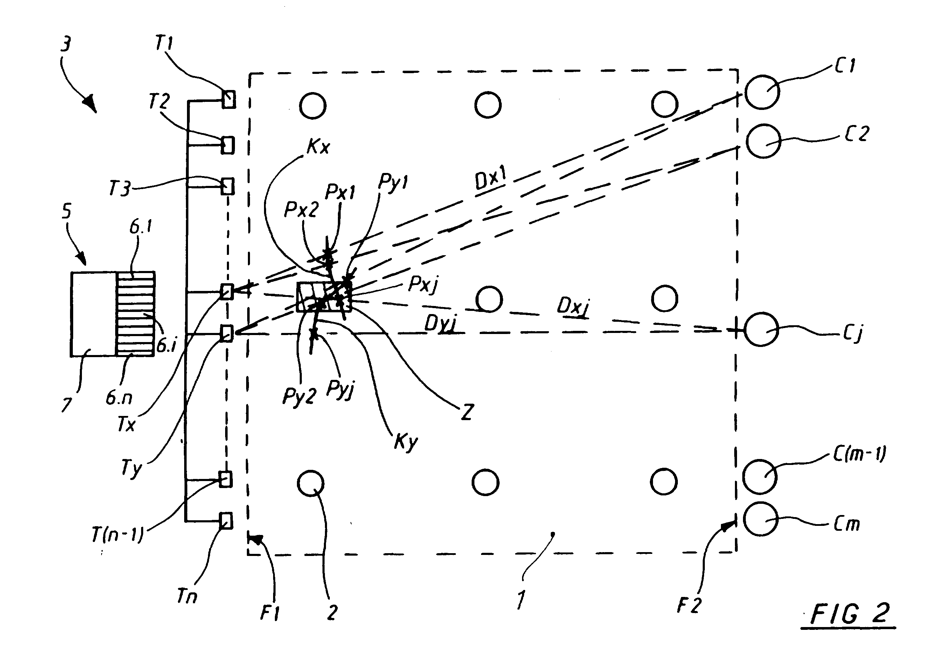

La figure 2 est analogue à la figure 1 et elle montre deux transducteurs Tx et Ty qui ont été retenus suite à la focalisation de la détection sur une première mine.

L'électronique de traitement 5 détermine alors, pour chacun des transducteurs retenus (Tx et Ty), différents points ou zones de localisation potentiels pour la mine le long des différentes directions Dxj,Dyj qui joignent chaque transducteur Tx,Ty considéré à une cible étalon Cj.

Cette détermination se fera par le calcul des différentes distances dxj, dyj (j variant de 1 à m) le long des directions Dxj, Dyj. Les distances dxj et dyj sont égales au produit du temps de propagation mesuré tx,ty par le coefficient approprié Vxj, Vyj de la matrice des vitesses de propagation (dxj= Vxj x tx; dyj= Vyj x ty).

Ce calcul permet de déterminer, associés à chaque transducteur Tx ou Ty, un certain nombre de points, respectivement: Px1, Px2, ...Pxj, ...Pxm, et Py1, Py2, ...Pyj,...Pym.

Les points Pxj associés au transducteur Tx forment une courbe Kx, ceux associés au transducteur Ty forment une courbe Ky.

La localisation potentielle de la première cible se situera à l'intersection des courbes Kx et Ky, ou au niveau d'une zone pour laquelle la distance entre les courbes est minimale.

Pratiquement le calculateur 11 assurera la détermination des courbes Kx et Ky, par exemple en mettant en oeuvre des méthodes mathématiques connues comme l'approximation polynomiale.

On choisira de préférence des transducteurs Tx et Ty contigus. Mais on pourra également utiliser des transducteurs non contigus ou plus de deux transducteurs. Une zone de localisation de la première mine pourra alors être définie par la zone contenant les différentes intersections des courbes K deux à deux.

Pratiquement on parlera de zone de localisation et non de point de localisation. En effet, compte tenu des erreurs sur les mesures des vitesses de propagation, des distances et des temps, une cible se trouve potentiellement non pas en un point Pxj, Pyj sur une direction Dxj ou Dyj mais dans une zone Z (hachurée sur la figure), qui contient le point considéré et a une surface minimale.

Les calculs de position des différents points, la détermination mathématiques des courbes et la définition des zones de localisation seront faites par le calculateur 11.

Un écran de visualisation pourra faciliter l'exploitation des données par l'utilisateur (visualisation des courbes et/ou des zones de localisation avec indication de leurs coordonnées).

Le calculateur 11 effectue aussi la comparaison des signaux reçus avec la bibliothèque de mines et il comprendra donc les mémoires contenant la bibliothèque de signatures ainsi que les circuits neuronaux nécessaires.

Après détection et localisation d'une première mine, on réitérera le procédé selon l'invention de façon à détecter et localiser une autre mine. On choisira pour cela une autre fenêtre temporelle.

Après repérage d'au moins quatre mines, il sera possible de rechercher sur ces quatre premières mines la présence d'un motif de pose, c'est à dire d'une maille élémentaire qui est habituellement répétée de façon régulière sur le terrain lors de l'enfouissement des mines.

La détermination de ce motif permettra d'accélérer la recherche des autres mines en permettant une définition rapide des fenêtres temporelles qui correspondront aux zones de terrain pour lesquelles une mine peut théoriquement se trouver si la maille est exacte.

Il est ainsi possible de définir un algorithme d'exploration du terrain qui permettra de donner rapidement une image de la répartition des mines sur le terrain.

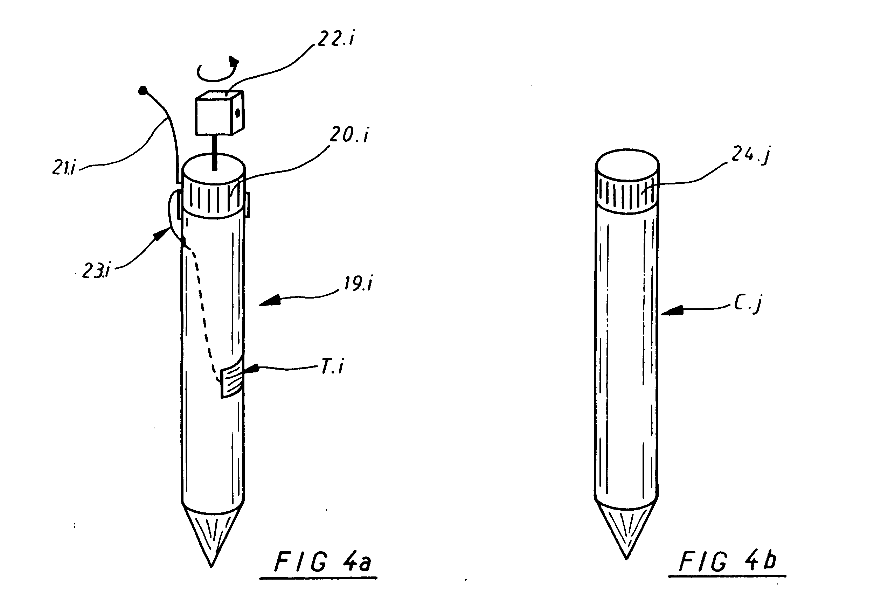

La figure 4a montre un piquet 19.i qui porte à sa partie inférieure un transducteur Ti et à sa partie supérieure un boîtier 20.i qui contient la voie de traitement 6.i associée au transducteur Ti porté par le piquet.

Le boîtier 20.i contient également un émetteur/récepteur radio et il porte une antenne 21.i ainsi qu'un télémètre laser orientable angulairement 22.i.

Le boîtier 20.i sera de préférence démontable du piquet 19 afin de permettre l'enfoncement de celui-ci. Des moyens de liaison électrique seront prévus entre le transducteur Ti et le boîtier 20.i qui comprendront notamment un connecteur 23.i.

La figure 4b montre une cible étalon Cj qui affecte la forme d'un piquet. Elle porte à sa partie supérieure une bande réfléchissante 24.j qui facilite son repérage par les différents télémètres laser 22.i.

La figure 4c montre un autre type de cible étalon Cj qui comprend un piquet portant à sa partie supérieure une bande réfléchissante 24.j et à sa partie inférieure un cylindre 27 ayant les dimensions d'une mine réelle qu'on souhaite rechercher dans le terrain. Comme cela a déja été précisé précédemment, on choisira pour réaliser le cylindre le même matériau que celui des mines recherchées.

Lorsqu'on utilise une telle cible étalon, on peut enregistrer la forme de l'écho qu'elle renvoie dans le terrain considéré. On alimente ainsi la bibliothèque de signatures décrite précédemment et on pourra ensuite rechercher avantageusement les objets situés dans le terrain qui renvoient le même type d'écho. On pourra réitérer les opérations de cartographie et de recherche en utilisant des cibles étalons de dimensions différentes afin de faciliter la recherche d'autres types d'objets.

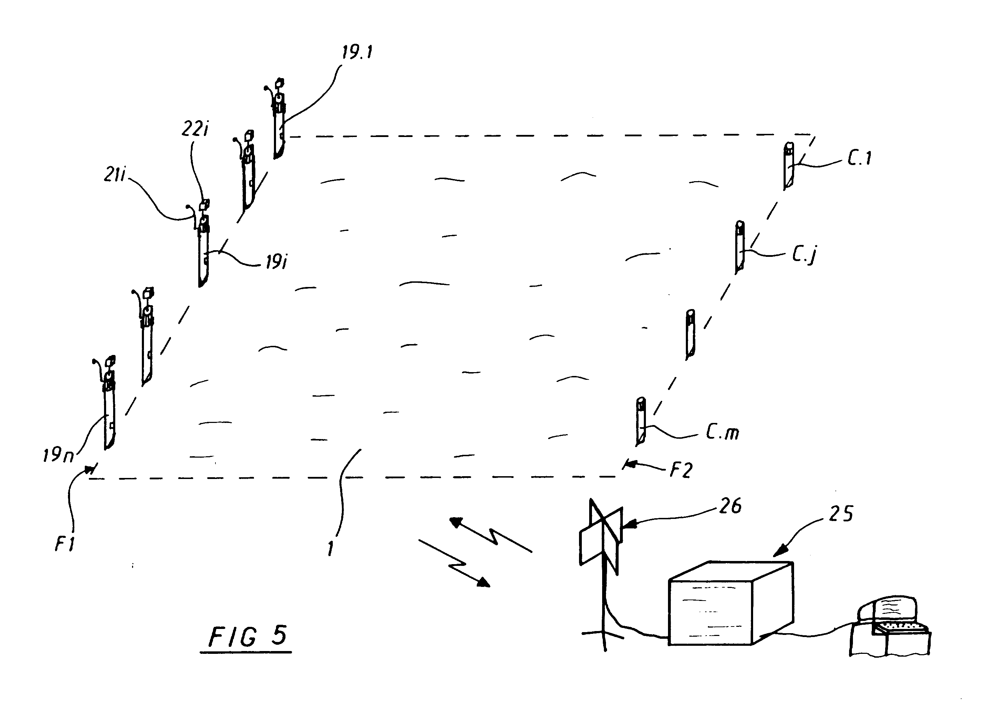

La figure 5 montre la mise en oeuvre du dispositif selon l'invention.

Les piquets 19.i portant les transducteurs Ti sont mis en place de façon individuelle le long de la première frontière F1 de la zone de terrain 1.

Les cibles étalons Cj sont enfoncées dans le sol le long de la deuxième frontière F2.

Les écartements des différents piquets et des différentes cibles ont été mesurés avec précision lors de leur mise en place, par exemple avec les télémètres laser.

On donnera à tous les piquets porte transducteur un même enfoncement dans le sol.

Un module de pilotage 25 est disposé à distance de la zone de terrain 1. Il contient lui aussi un émetteur / récepteur radio couplé à une antenne 26, il est relié à un écran de contrôle et à un clavier de commande.

Le module de pilotage contient une partie de l'électronique de traitement. Il assure la fonction d'ensemble de commande et contrôle commun 7 décrite précédemment en référence à la figure 3. Ainsi il contiendra une horloge 9, un cadenceur 10 et un calculateur 11. L'emploi d'une horloge et d'un cadenceur commun ainsi que d'une liaison radio permet d'assurer une synchronisation des émissions des différents transducteurs même pour un nombre important de ces derniers et pour des distances importantes.

Un décodeur permettra de transformer les informations radio envoyées par les différents piquets en informations utilisables par le calculateur.

A titre de variante, il est possible de placer les télémètres laser non pas sur les piquets porte transducteurs mais sur les piquets cibles Cj. Les piquets 19.i porteront alors une bande réfléchissante pour faciliter leur repérage et les piquets cibles Cj seront dotés d'émetteur/récepteurs radio pour assurer leur liaison au module de commande 25.

Selon un autre mode de réalisation de l'invention il est possible de mettre en oeuvre le procédé de détection décrit en référence à la figure 2 en utilisant une cartographie des vitesses de propagation obtenue par un procédé différent de celui décrit en référence à la figure 1.

On pourra par exemple doter chaque cible étalon Cj d'un récepteur des signaux acoustiques émis par les transducteurs Ti.

On procédera alors de la façon suivante:
- on envoie à partir d'un transducteur Ti un signal bref et non focalisé à la fréquence optimale,
- on enregistre le temps de propagation de ce signal entre la source constituée par le transducteur Ti et les différentes cibles étalons,
- on calcule les vitesses de propagation moyennes Vij entre le transducteur Ti et les différents récepteurs comme le rapport pour un transducteur Ti, de sa distance Dij à une cible étalon Cj au temps de propagation tij du signal entre ce transducteur et cette cible tel qu'il est mesuré (soit: Vij= Dij/tij),

On réalisera ces différentes étapes pour tous les transducteurs Ti (i variant de 1 à n).

D'une façon analogue on pourra doter chaque cible étalon Cj d'un émetteur de signaux acoustiques et utiliser les différents transducteurs Ti comme récepteurs.

Dans tous les cas, des moyens de liaison radio seront prévus entre les transducteurs et/ou les cibles et le module de commande 25. Les différents calculs seront assurés par le calculateur 11 qui est placé dans celui-ci.

A titre de variante, il est possible après détection d'une mine de provoquer son initiation ou encore de la faire bouger, ce qui pourra faciliter son répèrage suite à la modification de l'aspect du terrain qui en résultera.

Pour cela on focalisera sur elle, en utilisant les derniers signaux d'échos mémorisés, une énergie acoustique importante. On enverra ainsi sur elle un dernier signal retourné temporellement mais dont l'amplitude sera considérablement rablement amplifiée au moyen d'un générateur de puissance approprié (par exemple dans un rapport de 1000 à 100.000 suivant la nature, dure ou meuble, du sol).

L'invention a été décrite dans le cadre de son application à la détection de mines terrestres. Elle est bien entendue applicable à la détection d'objets enterrés ou au repérage d'hétérogénéités du sol.

## Revendications

1. Procédé de détection d'objets (2), et en particulier de mines, répartis dans une zone de terrain (1), ***caractérisé en ce qu***'on met en oeuvre une pluralité de transducteurs acoustiques (T1,..Ti,..Tn) et qu'on réalise les étapes suivantes:
- on dispose n transducteurs le long d'une première frontière (F1) de la zone, m cibles étalons (C1,..Cj,..Cm) (m étant supérieur à 2) étant réparties le long d'une deuxième frontière (F2) de la zone,
- on détermine une fréquence optimale d'emploi des transducteurs qui est fonction de la nature du sol, fréquence qui donne une amplitude de signal reçu maximale sur une majorité de transducteurs lorsqu'elle est émise par l'un d'eux,
- on réalise une cartographie des caractéristiques de propagation dans le sol de la zone de terrain en déterminant une matrice des vitesses de propagation moyennes Vij le long des différentes directions qui relient chaque transducteur Ti (i variant de 1 à n) à chacune des cibles étalons Cj (j variant de 1 à m),
- on envoie dans le sol du terrain par au moins un transducteur une impulsion initiale à la fréquence optimale,
- on sélectionne au moyen d'au moins une fenêtre temporelle, les signaux d'écho provenant d'un premier objet situé dans la zone,
- on effectue k retournements temporels successifs des signaux reçus par les transducteurs afin de focaliser la détection sur le premier objet et on mémorise les signaux réflechis à l'issue du dernier retournement temporel,
- on recherche au moins deux transducteurs Tx, Ty pour lesquels les temps de propagation du signal tx, ty sont les plus faibles,
- on détermine pour chacun des transducteurs retenus les points ou zones de localisation potentiels pour l'objet le long de plusieurs directions Dxj,Dyj joignant le transducteur Tx,Ty considéré à une cible étalon Cj, cette détermination se faisant par le calcul des différentes distances dxj, dyj (j variant de 1 à m) le long des directions Dxj,Dyj, distance égale au produit du temps de propagation considéré tx,ty par le coefficient approprié Vxj, Vyj de la matrice des vitesses de propagation,
- on détermine la localisation effective de l'objet comme une zone d'intersection des différentes courbes (Kx,Ky) joignant les points de localisation potentielle associés à chaque transducteur.

2. Procédé de détection selon la revendication 1, caractérisé en ce que, pour déterminer la matrice des vitesses de propagation moyennes Vij le long des différentes directions qui relient chaque transducteur Ti à chacune des cibles étalons Cj on procède de la façon suivante:
- on envoie dans le sol du terrain par au moins un transducteur une impulsion initiale brève et non focalisée à la fréquence optimale,
- on enregistre les signaux d'écho renvoyés par le terrain et reçus par tous les transducteurs, chaque signal de retour étant mémorisé en fonction du temps, avec comme origine des temps l'instant d'envoi de l'impulsion initiale,
- on sélectionne successivement au moyen de fenêtres temporelles appropriées, les signaux d'écho provenant de chaque cible étalon et on effectue pour chaque cible étalon plusieurs retournements temporels des signaux reçus par les transducteurs,
- on calcule les vitesses de propagation moyennes Vij comme le rapport pour chaque transducteur Ti, de sa distance Dij à la cible étalon Cj sur laquelle les transducteurs sont focalisés, au temps de propagation tij du signal entre ce transducteur et cette cible tel qu'il est mesuré (soit: Vij= Dij/tij).

3. Procédé de détection selon la revendication 1, caractérisé en ce que, pour déterminer la matrice des vitesses de propagation moyennes Vij le long des différentes directions qui relient chaque transducteur Ti à chacune des cibles étalons Cj on dote chaque cible étalon d'un emetteur et/ou d'un recepteur de signaux acoustiques puis on procède de la façon suivante:
(a)-on envoie à partir d'une source, qui sera soit une cible étalon soit un transducteur, un signal bref et non focalisé à la fréquence optimale,
(b)-on enregistre le temps de propagation de ce signal entre la source du signal, c'est à dire la cible étalon ou le transducteur, et les différents récepteurs soit respectivement tous les autres transducteurs ou toutes les autres cibles étalons,
(c)-on calcule les vitesses de propagation moyennes Vij entre la source du signal et les différents récepteurs comme le rapport pour un transducteur Ti, de sa distance Dij à une cible étalon Cj au temps de propagation tij du signal entre ce transducteur et cette cible tel qu'il est mesuré (soit: vij= Dij/tij),
(d)-on répète les étapes (a) à (c) pour toutes les autres sources.

4. Procédé de détection selon une des revendications 1 à 3, caractérisé en ce qu'après reception des premiers signaux écho on choisit le premier objet (2) à traiter par retournement temporel par une analyse des ondes de forme suivant les différents echos de retour reçus par chaque transducteur, suivie d'une comparaison de ces ondes de forme à une bibliothèque de signatures caractéristiques des principaux objets recherchés.

5. Procédé de détection selon une des revendications 1 à 4, caractérisé en ce qu'on identifie le premier objet (2) après exécution des k retournements temporels par une analyse des ondes de forme suivant les différents signaux echos reçus par chaque transducteur et comparaison de ces ondes de forme à une bibliothèque de signatures caractéristiques des principaux objets recherchés.

6. Procédé de détection selon une des revendications 1 à 5, caractérisé en ce que, après localisation et choix d'un premier objet, on envoie à celui-ci au moins un autre signal acoustique ayant la forme de celui mémorisé à l'issue du dernier retournement temporel, signal amplifié et dont l'intensité est suffisante pour faire bouger ou vibrer l'objet.

7. Procédé de détermination des caractéristiques de propagation d'une onde acoustique dans le sol d'une zone de terrain, caractérisé en ce qu'on met en oeuvre une pluralité de transducteurs acoustiques (T1,..Ti,..Tn) et qu'on réalise les étapes suivantes:
- on dispose n transducteurs le long d'une première frontière (F1) de la zone et on répartit m cibles étalons (C1,..Cj,..Cm) (m étant supérieur à 2) le long d'une deuxième frontière (F2) de la zone,
- on détermine une fréquence optimale d'emploi des transducteurs qui est fonction de la nature du sol, fréquence qui donne une amplitude de signal reçu maximale sur une majorité de transducteurs lorsqu'elle est émise par l'un d'eux,
- on envoie dans le sol du terrain par au moins un transducteur une impulsion initiale brève et non focalisée à cette fréquence optimale,
- on enregistre les signaux d'écho renvoyés par le terrain et reçus par tous les transducteurs, chaque signal de retour étant mémorisé en fonction du temps, avec comme origine des temps l'instant d'envoi de l'impulsion initiale,
- on sélectionne successivement au moyen de fenêtres temporelles appropriées, les signaux d'écho provenant de chaque cible étalon et on effectue pour chaque cible étalon plusieurs retournements temporels des signaux reçus par les transducteurs,
- on réalise une cartographie des caractéristiques de propagation dans le sol de la zone de terrain en déterminant une matrice des vitesses de propagation moyennes Vij le long des différentes directions reliant chaque transducteur Ti (i variant de 1 à n) à chacune des cibles étalons Cj (j variant de 1 à m), chaque vitesse Vij étant calculée comme le rapport pour chaque transducteur Ti, de sa distance Dij à la cible étalon Cj sur laquelle les transducteurs sont focalisés, au temps de propagation tij du signal entre ce transducteur et cette cible tel qu'il est mesuré (soit: Vij= Dij/tij).

8. Dispositif (3) de détermination des caractéristiques de propagation d'une onde acoustique dans le sol d'une zone (1) de terrain ou de détection d'objets (2), et en particulier de mines réparties dans une zone de terrain, et adapté pour mettre en oeuvre un procédé selon une des revendications 1 à 7, caractérisé en ce qu'il comporte au moins une rangée de transducteurs acoustiques (T1,..Ti,..Tn) reliés à un électronique de traitement (5) comportant une étape de retournement temporel, chaque transducteur étant porté par un support (19.i) destiné à être enfoncé ou appliqué sur le sol.

9. Dispositif selon la revendication 8, caractérisé en ce qu'il comprend au moins une rangée de cibles étalons (C1,..Cj,..Cm) qui ont la forme de piquets pouvant être enfoncés dans le sol.

10. Dispositif selon la revendication 8, caractérisé en ce qu'il comprend au moins une rangée de cibles étalons (C1,..Cj,..Cm) qui comportent une partie enterrée (27) ayant sensiblement la forme d'un objet que l'on recherche dans le terrain.

11. Dispositif selon une des revendications 8 à 10, caractérisé en ce qu'il comporte des moyens de mesure (22,24) des différentes distances entre supports de transducteurs (19.i) et cibles étalons Cj.

12. Dispositif selon la revendication 11, caractérisé en ce que les moyens de mesure de distance comportent au moins un télémètre laser (22.i) porté par au moins un support de transducteur et/ou au moins une cible étalon.

13. Dispositif selon une des revendications 8 à 12, caractérisé en ce que les supports de transducteurs et/ou les cibles étalons étant mis en place de façon individuelle sur le terrain, des moyens de liaison radio (21.i) sont prévus entre chaque support de transducteur et/ou cible étalon et au moins une partie de l'électronique de traitement (5) de façon à permettre une synchronisation des émissions des transducteurs.

## Patentansprüche

1. Verfahren zum Erkennen von Objekten (2), vor allem von Minen, die in einer Geländezone (1) verteilt sind, *gekennzeichnet dadurch,* daß man eine Mehrzahl Schallmeßwandler (T1, .. Ti, ..Tn) einsetzt und folgende Phasen verwirklicht :
- man ordnet n Meßwandler entlang einer ersten Grenze (F1) der Zone an, während man m Eichziele (C1, .. Cj, ..Cm) (wo m größer als 2 ist) entlang einer zweiten Grenze (F2) der Zone anordnet,
- man bestimmt eine optimale Gebrauchsfrequenz der Meßwandler, die von der Beschaffenheit des Bodens abhängt und eine maximale Amplitude des Empfangens des Signals für eine Mehrzahl der Meßwandler ergibt, wenn sie von einem von ihnen abgegeben wird,
- man führt eine Kartographie der Ausbreitungsmerkmale im Boden der Geländezone durch, indem man eine Matrix der mittleren Ausbreitungsgeschwindigkeiten Vij entlang der verschiedenen Richtungen bestimmt, die jeden Meßwandler Ti (wobei sich i von 1 bis n ändert) mit jedem der Eichziele Cj (wobei sich j von 1 bis m ändert) verbinden,
- man sendet in den Geländeboden über mindestens einen Meßwandler einen Anfangsimpuls mit optimaler Frequenz,
- man wählt anhand mindestens eines zeitlichen Fensters die Echosignale aus, die von einem ersten Objekt stammen, das sich in der Zone befindet,
- man führt k aufeinanderfolgende zeitliche Umkehrungen der von den Meßwandlern empfangenen Signale durch, um die Detektion auf das erste Objekt zu fokussieren und speichert die reflektierten Signale nach dem ersten zeitlichen Umkehren,
- man erforscht mindestens zwei Meßwandler Tx, Ty, bei welchen die Ausbreitungszeiten des Signals tx, ty die geringsten sind,
- man bestimmt für jeden der ausgewählten Meßwandler die potentiellen Lagepunkte oder Lagezonen für das Objekt entlang mehrerer Richtungen Dxj, Dyj, die den betroffenen Meßwandler Tx, Ty mit einem Eichziel Cj verbinden, wobei diese Bestimmung durch die Berechnung der verschiedenen Entfernungen dxj, dyj (wobei j sich von 1 bis m ändert) entlang der Richtungen Dxj, Dyj erfolgt, welche Entfernung gleich dem Produkt der betroffenen Ausbreitungszeit tx, ty mal dem geeigneten Faktor Vxj, Vyj der Matrix der Ausbreitungsgeschwindigkeiten ist,
- man bestimmt die tatsächliche Lage des Objektes als eine Schnittstellenzone der verschiedenen Kurven (Kx, Ky), die die Punkte der potentiellen Lage verbindet, die zu jedem Meßwandler gehören.

2. Erkennungsverfahren gemäß dem Anspruch 1, gekennzeichnet dadurch, daß zur Bestimmung der Matrix der mittleren Ausbreitungsgeschwindigkeiten Vij entlang der verschiedenen Richtungen, die jeden Meßwandler Ti mit jedem der Eichziele Cj verbinden, wie folgt vorgegangen wird:
- man sendet in den Boden des Geländes über mindestens einen Meßwandler einen kurzen, nicht fokussierten Anfangsimpuls mit optimaler Frequenz,
- man registriert die Echosignale, die das Gelände zurücksendet, und die von allen Meßwandlern empfangen werden, wobei jedes Rückkehrsignal zeitabhängig gespeichert wird und als Ausgangspunkt der Zeiten der Augenblick verwendet wird, in dem der Anfangsimpuls gesendet wird,
- man wählt nacheinander anhand geeigneter zeitlicher Fenster die Echosignale aus, die von jedem Eichziel stammen und führt für jedes Eichziel mehrere zeitliche Umkehrungen der von den Meßwandlern empfangenen Signale durch,
- man berechnet die mittleren Ausbreitungsgeschwindigkeiten Vij als das Verhältnis für jeden Meßwandler Ti zwischen seiner Entfernung Dij vom Eichziel Cj, auf das die Meßwandler fokussiert sind, und der Ausbreitungszeit tij des Signals zwischen diesem Meßwandler und diesem Ziel, so wie diese Zeit gemessen wird (nämlich: Vij= Dij/tij).

3. Detektionsverfahren gemäß dem Anspruch 1, gekennzeichnet dadurch, daß zur Bestimmung der Matrix der mittleren Ausbreitungszeiten Vij entlang der verschiedenen Richtungen, die jeden Meßwandler Ti mit jedem der Eichziele Cj verbindet, jedes Eichziel mit einem Sender und/oder einem Empfänger für Schallsignale versehen wird und man dann wie folgt vorgeht:
(a)- man sendet ausgehend von einer Quelle, die entweder ein Eichziel oder Meßwandler ist, ein kurzes, nicht fokussiertes Signal mit optimaler Frequenz,
(b)- man registriert die Ausbreitungszeiten dieses Signals zwischen der Signalquelle, d. h. dem Eichziel oder dem Meßwandler und den verschiedenen Empfängern, nämlich allen anderen Meßwandlern oder allen anderen Eichzielen,
(c)- man berechnet die mittleren Ausbreitungsgeschwindigkeiten Vij zwischen der Signalquelle und den verschiedenen Empfängern als das Verhältnis für jeden Meßwandler Ti seiner Entfernung Dij von einem Eichziel Cj und der Ausbreitungszeit tij des Signals zwischen diesem Meßwandler und diesem Ziel, so wie diese Zeit gemessen wird (nämlich: Vij= Dij/tij),
(d)- man wiederholt die Phasen (a) bis (c) für alle anderen Quellen.

4. Detektionsverfahren gemäß einem der Ansprüche 1 bis 3, gekennzeichnet dadurch, daß man nach dem Empfang der ersten Echosignale das erste durch zeitliche Umkehrung zu verarbeitende Objekt (2) anhand einer Analyse der Formwellen nachfolgenden den verschiedenen von jedem Meßwandler empfangenen Rückkehrechos auswählt und diese Formen mit einer Bibliothek der charakteristischen Signaturen der wichtigsten gesuchten Objekte vergleicht.

5. Detektionsverfahren gemäß einem der Ansprüche 1 bis 4, gekennzeichnet dadurch, daß man das erste Objekt (2) nach Durchführung von k zeitlichen Umkehrungen anhand einer Analyse der Formwellen nachfolgenden den verschiedenen von jedem Meßwandler empfangenen Echosignalen identifiziert und diese Formwellen mit einer Bibliothek der charakteristischen Signaturen der wichtigsten gesuchten Objekte vergleicht.

6. Detektionsverfahren gemäß einem der Ansprüche 1 bis 5, gekennzeichnet dadurch, daß nach Lokalisierung und Auswahl eines ersten Objektes diesem mindestens ein weiteres Schallsignal gesendet wird, das die Form dessen hat, das nach der ersten zeitlichen Umkehrung registriert wurde, wobei dieses Signal verstärkt wird und seine Stärke ausreicht, um das Objekt zu bewegen oder schwingen zu lassen.

7. Bestimmungsverfahren der Merkmale der Ausbreitung einer Schallwelle im Boden einer Geländezone, gekennzeichnet dadurch, daß man eine Mehrzahl Schallmeßwandler (T1,..Ti, ..Tn) verwendet und folgende Phasen durchführt:
- man ordnet n Meßwandler entlang der ersten Grenze (F1) der Zone an und verteilt m Eichziele (C1,..Cj,..Cm) (wobei m größer ist als 2) entlang einer zweiten Grenze (F2) der Zone,
- man bestimmt eine optimale Gebrauchsfrequenz der Meßwandler, die von der Bodenbeschaffenheit abhängt, wobei die Frequenz eine maximale Amplitude des empfangenen Signals auf einer Mehrzahl Meßwandler ergibt, wenn sie von einem von ihnen gesendet wird,
- man sendet in den Geländeboden über mindestens einen der Meßwandler einen kurzen, nicht fokussierten Anfangsimpuls mit dieser optimalen Frequenz,
- man registriert die vom Gelände reflektierten Echosignale, die von allen Meßwandlern empfangen werden, wobei jedes Rückkehrsignal in Zeitabhängigkeit gespeichert wird, wobei man als Ursprung der Zeit den Augenblick des Sendens des Ausgangsimpulses verwendet,
- man wählt nacheinander anhand geeigneter zeitlicher Fenster die Echosignale aus, die von jedem Eichziel stammen und führt für jedes Eichziel mehrere zeitliche Umkehrungen der von den Meßwandlern empfangenen Signale durch,
- man legt eine Kartographie der Ausbreitungsmerkmale im Boden der Geländezone an, indem man eine Matrix der mittleren Ausbreitungsgeschwindigkeiten Vij entlang der verschiedenen Richtungen bestimmt, die jeden Meßwandler Ti (wobei sich i von 1 bis n ändert) mit jedem der Eichziele Cj (wobei sich j von 1 bis m ändert) verbinden, wobei jede Geschwindigkeit Vij das Verhältnis für jeden Meßwandler T1 zwischen seiner Entfernung Dij vom Eichziel Cj, auf den die Meßwandler fokussiert sind, und der Ausbreitungszeit (tij) des Signals zwischen diesem Meßwandler und diesem Ziel, so wie diese Zeit gemessen wird (nämlich: Vij=Dij/tij) berechnet wird.

8. Vorrichtung (3) zur Bestimmung der Ausbreitungsmerkmale einer Schallwelle im Boden einer Geländezone (1) oder zur Detektion von Objekten (2) und vor allem von Minen, die in einer Geländezone verteilt sind und geeignet, um ein Verfahren gemäß einem der Ansprüche 1 bis 7 durchzuführen, gekennzeichnet dadurch, daß sie mindestens eine Reihe Schallmeßwandler (T1, .. Ti,.. Tn) umfaßt, die mit einer Verarbeitungselektronik (5) verbunden sind, die eine Phase der zeitlichen Umkehrung umfaßt, wobei jeder Meßwandler von einem Träger (19.i) getragen wird, der in den Boden getrieben oder an den Boden gedrückt wird.

9. Vorrichtung gemäß dem Anspruch 8, gekennzeichnet dadurch, daß sie mindestens eine Reihe Eichziele (C1, ...Cj,.. Cm) umfaßt, die die Form von Pflöcken haben, die in den Boden getrieben werden können.

10. Vorrichtung gemäß dem Anspruch 8, gekennzeichnet dadurch, daß sie mindestens eine Reihe Eichziele (C1,...Cj,.. Cm) umfaßt, die einen vergrabenen Teil (27) umfassen, der in etwa die Form eines Objektes hat, das man im Gelände sucht.

11. Vorrichtung gemäß einem Ansprüche 8 bis 10, gekennzeichnet dadurch, daß sie Meßmittel (22, 24) der verschiedenen Entfernungen zwischen den Meßwandlerträgern (19.i) und den Eichzielen Cj umfaßt.

12. Vorrichtung gemäß dem Anspruch 11, gekennzeichnet dadurch, daß die Entfernungsmeßmittel mindestens ein Lasertelemeter (22.i) umfassen, das von mindestens einem Meßwandlerträger und/oder mindestens einem Eichziel getragen wird.

13. Vorrichtung gemäß einem der Ansprüche 8 bis 12, gekennzeichnet dadurch, daß die Meßwandlerträger und/oder Eichziele einzeln auf dem Gelände angeordnet werden, wobei zwischen jedem Meßwandlerträger und/oder jedem Eichziel Funkverbindungsmittel (21,i) und mindestens ein Teil der Verarbeitungselektronik vorgesehen sind (5), so daß eine Synchronisierung der Meßwandlersendungen möglich ist.

## Claims

1. A process to detect objects (2), and in particular mines, dispersed in an area of land (1), characterised in that a multiplicity of acoustic transducers (T1, ... Ti, ...Tn) are implemented and in that the following stages are carried out :
- n transducers are arranged along a first border (F1) of the area, m reference targets(C1, ... Cj, ...Cm) (m being more than 2) being distributed along a second border (F2) of the area,
- an optimal operational frequency is determined for the transducers in accordance with the type of ground, a frequency which gives a received signal amplitude which is at its maximum for the majority of the transducers when emitted by one of them,
- a cartography of the propagation characteristics in the ground of the area of land is made by determining a mean propagation speed Vij matrix along the different directions which connect each transducer Ti (i varying from 1 to n) to each of the reference targets Cj (j varying from 1 to m),
- an initial pulse at the optimal frequency is sent into the ground by at least one transducer,
- by means of at least one temporal window, the echo signals coming from a first object located in the area are selected,
- k successive temporal reversals of the signals received by the transducers are made so as to focus detection of the first object and the signals reflected after the last temporal reversal are memorised,
- two transducers Tx, Ty at least are located for which the propagation times of the signal tx, ty are the lowest,
- the potential location points or zones for objects are determined for the transducers retained along several directions Dxj, Dyj which link the transducer Tx, Ty in question to a reference target Cj, the determination is made by computing the different distances dxj, dyj, (j varying from 1 to m) along directions Dxj, Dyj, the distance being equal to the product of the propagation time in question tx, ty by the appropriate coefficient Vxj, Vyj of the propagation speed matrix,
- the actual location of the object is determined as the intersection zone of the different curves (Kx, Ky) linking the potential location points associated with each transducer.

2. A detection process according to Claim 1, characterised in that to determine the mean propagation speed Vij matrix along the different directions which link each transducer Ti to each of the reference targets Cj, the following process is observed :
- a brief and unfocused initial pulse is sent into the ground by at least one transducer at the optimal frequency,
- the echo signals sent back by the ground and received by all the transducers are recorded, each return signal being memorised according to time, with the start time being the instant of sending the initial pulse,
- by means of appropriate temporal windows, the echos signals coming from each reference target and successively selected and for each reference target several temporal reversals are carried out for the signals received by the transducers,
- the mean propagation speeds Vij are computed as the quotient, for each transducer Ti, of its distance Dij from the reference target Cj on which the transducers are focused to the propagation time tij of the signal between this transducers and this target as it has been measured (i.e. Vij=Dij/tij).

3. A detection process according to Claim 1, characterised in that to determine the mean propagation speed Vij matrix along the different directions which link each transducer Ti to each of the reference targets Cj, each reference target is alloted an acoustic signal emitter and/or receiver and the following process is observed :
(a) - a brief and unfocused signal is sent at the optimal frequency from a source, either a reference target or a transducer,
(b) - the propagation time of this signal is measured between the source of the signal, i.e. the reference target or the transducer and the different receivers, either all the transducers respectively or all the other reference targets,
(c) - the mean propagation speeds Vij between the source of the signal and the different receivers is computed as the quotient, for a transducer Ti, of its distance Dij from a reference target Cj to the propagation time tij of the signal between this transducer and this target such as it has been measured (i.e. Vij= Dij/tij),
(d) - the above stages (a) to (c) are repeated for all the other sources.

4. A detection process according to one of Claims 1 to 3, characterised in that after receiving the first echo signals the first object (2) to be processed by temporal reversal is chosen by analysing the wave shapes following
the different return echos received by each transducer, followed by a comparison of these wave shapes against a library of characteristic signatures of the main objects to be detected.

5. A detection process according to one of Claims 1 to 4, characterised in that the first object (2) is identified after carrying out k temporal reversals by analysing the wave shapes following the different echo signals received by each transducer and comparing these wave shapes against a library of characteristic signatures of the main objects to be detected.

6. A detection process according to one of Claims 1 to 5, characterised in that after locating and selecting a first object, at least one other acoustic signal is sent to the latter which is in the shape of the one memorised at the end of the last temporal reversal, a signal which is amplified and whose intensity is sufficient to make the object move or vibrate.

7. A process to determine the propagation characteristics of an acoustic wave in the ground in an area of land, characterised in that a multiplicity of transducers (T1, ... Ti, ... Tn) is implemented and in that the following stages are carried out :
- n transducers are arranged along a first border (Fl) of the area and m reference targets (C1, ...Cj,...Cm) (m being more than 2) are distributed along a second border (F2) of the area,
- an optimal operational frequency for the transducers is determined which depends on the type of ground, a frequency which gives a received signal whose amplitude is at its maximum for a majority of transducers when it is emitted by one of them,
- a brief unfocused pulse is sent into the ground of the area by at least one transducer at the optimal frequency,
- the echos signals returned by the ground and received by all the transducers are recorded, each return signal being memorised according to time, with as the start time the instant of sending the initial pulse,
- the echo signals coming from each reference target are successively selected by means of a suitable temporal window, and several temporal reversals are carried out of the signals received by the transducers for each reference target,
- a cartography of the propagation characteristics in the ground of the area of land is made by determining a matrix of the mean propagation speeds Vij along the different directions linking each transducer Ti (i varying from 1 to n) to each of the reference targets Cj (j varying from 1 to m), each speed Vij being computed as the quotient, for each transducer Ti, of its distance Dij from the reference target Cj on which the transducers are focused, to the propagation time tij of the signal between this transducer and this target such as it has been measured (i.e. Vij = Dij/tij).

8. A device (3) to determine the propagation characteristics of an acoustic wave in the ground of an area of land (1) or to detect objects (2), and in particular mines dispersed in an area of land and suitable to implement a process according to one of Claims 1 to 7, a device characterised in that it comprises at least one row of acoustic transducers (T1, ...Ti, ...Tn) connected to processing electronics (5) and including a temporal reversals step, each transducer being carried by a support (19.i) designed to be pushed into or applied onto the ground.

9. A device according to Claim 8, characterised in that it comprises at least one row of reference targets (C1,...Cj,...Cm) which are in the shape of peg able to be pushed into the ground.

10. A device according to Claim 8, characterised in that it comprises at least one row of reference targets (C1,...Cj,...Cm) which comprise a buried part (27) being roughly of the same shape as the objects which are being searched for in the ground.

11. A device according to one of Claims 8 to 10, characterised in that it comprises measuring means (22, 24) for the different distances separating the transducer supports (19.i) and the reference targets Cj.

12. A device according to Claim 11, characterised in that the means for measuring distance can comprise at least a laser range finder (22.i) carried by at least one transducer support and/or a reference target.

13. A device according to Claims 8 to 12, characterised in that, the transducer supports and/or the reference targets being individually set into place in the ground, radio link means (21.i) are provided between each transducer support and/or reference target and at least a part of the processing electronics (5) so as to enable the transducer emissions to be synchronised.
